# EUROPEAN PATENT APPLICATION

(11) **EP 1 932 652 A1**
(43) Date of publication of application: **18.06.2008**
(21) Application number: 06125802.6
(22) Date of filing: 11.12.2006
(51) Int. Cl.: B29C 70/34, B29L 31/30, B29K 105/08

(54) **A method and apparatus for manufacturing a curved elongated structural element**

(71) Applicant: SAAB AB, 581 88 Linköping (SE)
(72) Inventor: Petersson, Mikael, 585 90 Linköping (SE); Weidmann, Björn, 590 31 Borensberg (SE); Krogager, Max, 582 42 Linköping (SE)
(74) Representative: Herbjörnsen, Rut

(57) **Abstract**

The present invention relates to a method and an apparatus for manufacturing of a curved elongated structural element (20) of composite material, the curved elongated structural element (20) comprises a first elongated portion (23) and a second elongated portion (25) in an angled relation, the method comprises the steps of: providing a substantially flat blank (1) of composite material comprising a first (19') and second elongated edge (19"); folding the blank (1) over a first portion forming surface (31) and a second portion forming surface (33) of a forming tool's (15) flexible tool body (17) for forming the first elongated portion (23) and the second elongated portion (25); and bending the forming tool's (15) tool body (17) such that its bending moment centre (Mc) prevails essentially adjacent the first portion forming surface (31).

## Description

### TECHNICAL FIELD OF THE INVENTION

The present invention relates to a method for manufacturing of a curved elongate structural element of composite material according to the pre-characterising part of claim 1, and to an apparatus for manufacturing of the curved elongate structural element stiffening element according to the pre-characterising part of claim 10. The present invention relates, but not limited, to aircraft industry.

### BACKGROUND OF THE INVENTION

Methods for manufacture of composite materials using "prepreg" material (layers of fibre material previously impregnated with resin, such as thermosetting resin) exist today. When manufacture of curved elongate structural element (such as aircraft ribs, beams etc. having for example a C-shaped cross section) of composite material, the curved structural element is formed by application of prepreg material over an arc curved tool.

Each layer of prepreg material is applied by hand onto the tool for avoiding creasing and folds. It is thus today time-consuming to form an aircraft beam of composite material before curing the same. The manual work of application of prepreg material is required since it is difficult to provide that the fibre material will follow the curvature. Especially C-shaped aircraft beams of composite material are difficult to manufacture since the fibre material tend to not follow the curvature. It is also hard to work the blank by hand and the hand working personnel may be worn out with hard work. The hand work also implies a high effort in securing that no gaps will occur between the prepreg plies applied onto the beam being formed. Also when forming the inner flange of the beam, a tendency exists that the composite material will have wrinkles and within this area.

US 4 512 835 discloses a method for manufacture of curved fiber-reinforced composite beams wherein the beam is provided with arc shaped surfaces before high strength filaments are placed onto the surfaces.

The object of the present invention is to overcome the drawbacks of known methods and to provide a solution alternative to hand preparation of composite material, such as aircraft ribs, beams etc., which solution also implies a minimum of material spillage during manufacturing.

### SUMMARY OF THE INVENTION

This has been solved by a method being defined in the introduction, the method is characterised by the steps claimed in claim 1.

In such way the curved elongated structural element can be made in a cost-effective manner and no wrinkles will appear at the side of the inner flange or web having the smallest radius relative the other sides (outer flange/web) of the element.

Preferably, the method comprises the further steps of: folding the blank over a third portion forming surface of the forming tool for forming a third elongated portion opposite the first portion.

Thereby a C-beam having a first flange and a second flange and a web joining the flanges. The first elongated portion (the inner flange) having the smallest radius being made under influence of almost a bending performance by means of placing the bending moment centre within the area adjacent the first portion forming surface of the tool. The second elongated portion (the outer flange) opposite the inner flange, plus the web, being made under influence of tension forces. In such way the finished C-beam will have no wrinkles due to the bending forces causing tension forces, and no compression of the composite material will occur.

Suitably, the first and second elongated edges are essentially parallel with each other.

In such way the blank material can be used in an optimal manner. By laying the layers of prepreg-material in square portions onto each other for making the blank, the sides of the blank will constitute the side edges of the flanges and no material has therefore not to be cut of for making the curved elongated structural element.

Alternatively, the step of bending the forming tool's tool body is subsequent a step of clamping the blank's both short ends in a fix position relative the forming surfaces of the tool body.

Thereby the layers will be held over the forming area of the forming surfaces of the elongated forming tool and the blank material will, with the exception of the blank material of the first elongated portion, be influenced by the tension forces due to the bending of the elongated forming tool.

Preferably, the step of bending the tool body is performed such that the bending moment centre prevails absolutely adjacent the first portion forming surface.

In such way the first portion (i.e. the inner flange) will be made under influence of merely a bending performance.

Suitably, the step of providing the blank is performed by an automatic tape laying (ATL-) apparatus adding layers of fibre-reinforced tape onto each other.

Thereby the layers can be placed onto each other automatically in a cost-effective manner, wherein the layers of prepreg material (layer of fibre material previously impregnated with resin) form a square elongated blank and no material spillage occurs when finishing the curved elongated structural element.

Alternatively, the method further comprises the step of: curing the folded blank, and removing the curved elongated structural element from the forming tool.

In such way the curved elongated structural element can be finished in a short time and in a labour saving manner, directly in the forming tool.

Preferably, the step of curing the folded blank is performed by: sealing the blank in a vacuum bag before the folding step; evacuating air from the vacuum bag; heating the blank by means of a heating means; folding the blank; and bending the tool body in an adequate manner while increasing the temperature such that slipping between essentially all layers of the composite material occurs.

Thereby eventual air pockets between the layers can be minimized and limited to a certain predetermined extension. By bending the blank sufficiently slow and increasing the temperature gradually, the slipping between the 0-layers (layers extending in the longitudinal direction of the blank) and the other layers will occur.

Suitably, the first portion is a flange and the second portion is a web.

Thereby a C-beam is achieved suitable for application to an assembly of an aircraft or the like.

This has also been solved by an apparatus for manufacturing of a curved elongated element being described in the introduction, the apparatus being characterised by the features claimed in the characterising part of claim 10.

In such a way the production of the curved elongated structural element can be performed without generating any wrinkles of the flange/s and web and in a cost-effective manner. A tool body of flexible material (i.e. silicon) can be used together with a stiff elongated member placed near the first portion forming surface of the tool body so that the bending moment centre prevails near the first portion surface and along the extension of the tool body.

Suitably, the folding means comprises a vacuum bag being arranged for evacuation of air such that during said evacuation of air, the blank disposed therein will fold over the first and second portion forming surfaces of the tool body for providing an angle between the first elongated portion and the second elongated portion, the angle is seen in a cross section of the finished curved elongated structural element taken perpendicular to the longitudinal direction of the structural element.

Thereby is achieved that the blank initially will be formed with a flange/flanges and a web having for example an angle of 90 degrees between the portions (flange and web) seen through a cross section taken perpendicular to the longitudinal extension of the blank. By means of the flexible tool body, the blank will thereafter be bent by bending the tool body together with the vacuum bag, within which the blank has been placed. The vacuum bag is thereafter used for the bending procedure of the angled blank while increasing the temperature such that slipping between essentially all layers of the composite material occurs.

Preferably, the tool bending means is arranged such that during bending of the flexible tool body, the moment of flexure of the tool body prevails absolutely adjacent the first portion forming surface.

In such way the apparatus performs merely a bending action of the blank's inner flange and tension forces affect the other elongated portions, thereby the apparatus produces no wrinkles to the curved elongated structural element.

Alternatively, the tool bending means comprises an insert of rigid material being disposed adjacent the first portion forming surface of the flexible tool body and a stretchable strain member being disposed along the flexible tool body opposite the first portion forming surface of the flexible tool body.

An elongated stiff member, nevertheless bendable, is inserted as an insert in the tool body of for example silicon near the first portion forming surface. The bending moment centre will thereby be displaced from the centre of the tool body's longitudinal axis towards the first portion forming surface relative a flexible tool body having no insert. The insert may be an elongated element comprising carbon fibres/graphite fibres/ceramic-carbon composites or the like. The stretchable strain member can be coil springs of steel embedded in the flexible tool body, which springs have loops at their ends outside the tool body's short ends for connection to tension/bending devices of the apparatus.

Suitably, the insert coincides with the bending moment centre of the tool body during bending. Alternatively, the tool body can be arranged such that the moment centre of flexure, during use of the apparatus, can prevail at a distance from the first portion forming surface.

Preferably, the forming tool comprises a clamping device for clamping the blank's both short ends in a fix position relative the tool body.

Thereby is achieved that the layers of the blank not will slide over the tool body's forming surfaces during the bending process.

Suitably, a third portion forming surface of the flexible tool body is arranged opposite the first portion forming surface.

Thereby is achieved that a third elongated portion (such as a second outer flange) of the curved elongated structural element can be produced without any wrinkles.

### BRIEF DESCRIPTION OF THE DRAWINGS

The present invention will now be described by way of example with reference to the accompanying schematic drawings of which:
FIGS. 1a and 1b illustrate a blank of prepreg layers of fibre material and fibre directions;
FIGS. 2a-2c illustrate a folding performance according to a first embodiment;
FIGS. 3a and 3b illustrate a tool bending means of a tool body according to a second embodiment;
FIG. 4 illustrates a tool bending means according to a third embodiment;
FIG. 5 illustrates a tool bending means according to a fourth embodiment;
FIG. 6 illustrates a forming tool comprising a clamping device;
FIGS. 7a and 7b illustrate a tool body comprising an insert displacing the bending moment centre near the inner flange of a curved C-beam of composite material;
FIGS. 8a-8b illustrate tension of the composite after fulfilled bending, and;
FIGS. 9a-9c illustrate cross-sections of different curved elongated structural elements.

### DETAILED DESCRIPTION OF THE PREFERRED EMBODIMENTS

Hereinafter, embodiments of the present invention will be described in detail with reference to the accompanying drawings, wherein for the sake of clarity and understanding of the invention some details of no importance are deleted from the drawings.

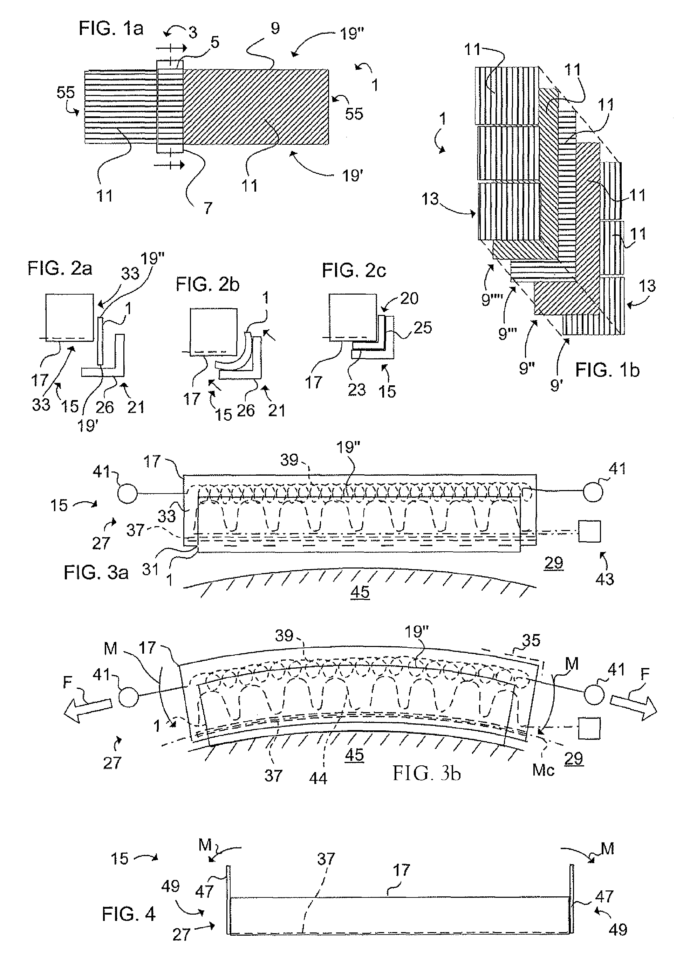

Referring to FIG. 1a, a blank 1 of composite material or plastic, such as thermosetting resin, is made by an ATL-apparatus 3. Unidirectional pre-impregnated tape 5, such as carbon fibre impregnated with thermoset resin, is typically supplied from a tape laying head 7 onto a flat tool (not shown) for lay up. A typical composite blank 1 consists of several plies 9 of tape laid up at various ply angles. A "ply" 9 consists of one layer of tape courses (fibres) 11. oriented at a given angle. Plies 9 are laid on top of one another to create a laminate. In FIG. 1b is shown illustratively the plies 9 having different angles of fibre 11. In reality, the plies are laid straight on top of one another, but for sake of clarity the plies 9 are shown drawn apart sideways. The first layer 9' being laid is the so called 0-layer (the fibre direction is in the longitudinal direction of the blank 1). Thereafter the ATL-apparatus 3 lays the second ply 9" having +45 degrees oriented fibres (the +45-layer). Subsequent third layer 9"' has 90 degree orientation of fibres. Next fourth layer 9"" has the -45 degrees fibres and subsequent layer is again the 0-layer. Preferably the 0-layer is divided into short portions 13 for making the following bending procedure more convenient, which will be explained further below. The blank 1 of plies 9 has a quadrangular form which means that the lay up of plies 9 by the ATL-apparatus could be done in a simple way relative if the blank itself was curved for further procedure of making a curved beam. The prepared blank 1 is thereafter placed onto a flexible tool body 17 of a forming tool 15. The blank's 1 first and second elongated edges 19', 19" are essentially parallel with each other, which means that no spillage is made during production of a curved elongated structural element 20 (such as a curved L-beam) since the first and second elongated edges 19', 19" will form the structural element's both elongated cants of the finished structural element 20.

FIGS. 2a-2c illustrate a folding means 21 acting for folding the blank 1 over the bendable tool body 17 of the forming tool 15 such that a flange 23 and a web 25 of the structural element 20 are formed initially before bending the tool body 17 creating a bent structural element 20. The folding means 21 moves towards the tool body 17 for folding the blank 1 such that an angle of 90 degrees is created between the flange 23 and the web 25. The folding means 21 comprises an angled female forming tool part 26, which also may be used when bending the blank 1 into the curved elongated structural element 20 (structural element).

FIGS. 3a and 3b illustrate a tool bending means 27 of a tool body 17 (of a male forming tool part) of an apparatus 29 for manufacturing the structural element. The curved elongated structural element 20 comprises a first elongated portion 23 (such as a flange) and a second elongated portion 25 (such as a web). The apparatus 29 comprises the forming tool 15 having a first portion forming surface 31 and a second portion forming surface 33 of the flexible tool body 17 of the forming tool 15.

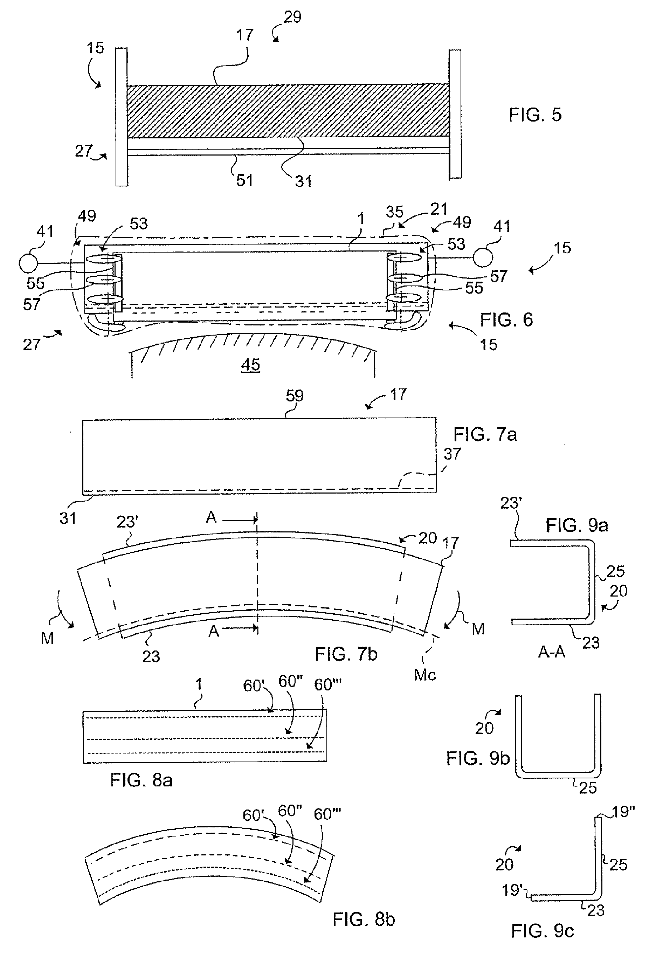

The folding means 21 in the form of a vacuum bag 35 (see FIG. 6) is arranged about the tool body 17 for folding the blank 1 of composite material over the first 31 and second 33 portion forming surface of the flexible tool body 17.

The tool bending means 27 is associated with (coupled to) the flexible tool body 17 for forming the curved elongated element 20. The tool bending means 27 comprises an insert 37 of rigid material being disposed adjacent the first portion forming surface 31 of the flexible tool body 17 and a stretchable strain member 39 being disposed along the flexible tool body 17 opposite the first portion forming surface 31 of the flexible tool body 17. A pull and bender device (such as remote controlled hydraulic cylinders, not shown) is coupled to the both eyes 41 of the stretchable strain member 39. For bending the tool body 17, the eyes 41 are pulled by forces F essentially in a direction from each other, wherein the insert 37 will retain the part of the tool body 17 essentially in a state not affected by the drawing forces F. Only a bending moment M will appear within the area of the tool body 17 adjacent the insert 37. Nearer the stretchable strain member 39 both a bending moment and a drawing action will appear in the flexible tool body 17. A heating means 43 is arranged within the tool body 17 for heating the blank 1 being bent. For guiding the bending action in a proper way, a curved guide jig 45, having the same curvature as the outer side of the flange 23 to be produced, is arranged for guiding the tool body 17 according to a proper curvature. Thus, according to this embodiment, the tool bending means 27 is arranged such that during the bending of the flexible tool body 17 along the longitudinal axis of the tool body 17, the bending moment centre Mc prevails essentially adjacent the first portion forming surface 31.

FIG. 4 illustrates a tool bending means 27 connected to the tool body 17 according to another embodiment. Arms 47 are arranged to the short ends 49 of the tool body 17. For bending the tool body 17, the arms 49 are pulled apart and at the same time rotated by means of a robot device (not shown) gripping the upper ends of the arms 49, such that during bending of the flexible tool body 17 creating a moment M, the bending moment centre Mc of the tool body 17 prevails absolutely adjacent the first portion forming surface 31. The stiff insert 37 is arranged tight to the first portion forming surface 31 and will coincide with the bending moment centre of the tool body 17 during the bending action.

FIG. 5 illustrates a forming tool 15 of an apparatus 29 according to a further embodiment. A stiff bendable plate 51 is arranged at a distance from the tool body 17. During bending of the tool body 17, the bending moment centre Mc of the tool body 17 prevails essentially adjacent the first portion forming surface 31, and the part of the structural element (not shown) having the smallest radius of curvature being nearest the stiff bendable plate 51 will thereby also be influenced by drawing forces, not just by a bending action. The drawing forces force the layers of composite (the plies) to slide between each other whereon wrinkles are avoided in the blank being bent.

FIG. 6 illustrates a forming tool 15 comprising a clamping device 53 for clamping the blank's 1 both short ends 55 in a fix position relative the forming tool's 15 tool body 17. For achieving that the 0-layer 9' (the fibre direction is in the longitudinal direction of the blank 1) will have a possibility to slide over the other layers having different fibre direction (such as the +45-layer 9", the 90-layer 9"' and the -45-layer 9""), the 0-layer 9' can be cut in shorter longitudinal portions 13 (see FIG. 1b) so that each of the +45-layer, the 90-layer and the -45-layer will be longer than the 0-layer portions 13. In such way the +45-layer, the 90-layer and the -45-layer will follow the stretching of the tool body 17. The largest stretching appears within the area of the tool body 17 furthest away from the rigid insert 37 or where the bending moment centre Mc prevails. The 0-layers 9' are fixed to the tool body T7 near its short ends 49. The tool clamping device 53 may comprise a two-sided Permagrip (not shown) being placed under the vacuum bag 35. For achieving an optimal composite structure, two adjacent layers do not have a fibre direction alteration angle there between of more than 45 degrees. In FIG. 6 the clamping device 53 comprises clamp irons 57 clamping braces 59 placed against the 0-layers 9', which layers 9' extend a bit from the blank's 1 short ends 55. The bending of the forming tool's 15 tool body 17 is performed after that the clamping of the blank's both short ends 55 is made, making the 0-layers in a fix position relative the tool body 17, at least within an area of the blank's 1 short ends 55.

After that the blank 1 has been folded over the tool body 17 and bent to a desirable curvature by the tool bending means 27, the blank 1, making up the curved elongated structural element 20, is cured. Thereafter the curved elongated structural element 20 is removed from the forming tool 15, wherein the tool body 17 is controlled to its initial straight position by releasing the forces of the tool bending means 27.

The step of curing the blank 1, may also be performed by sealing the blank in a vacuum bag 35 before the folding step. Thereafter air being evacuated from the vacuum bag 35 creating a vacuum environment for the blank 1. Thereafter, heating the blank 1 by means of the heating means 43 comprising a heating coil 44 embedded in the tool body 17. In the same time or shortly thereafter, the blank's 1 first elongated portion 23 (the flange) and second elongated portion 25 are folded over the tool body's 17 first portion forming surface 31 and second portion forming surface 33 respectively by means of the vacuum bag 35 forming the blank 1 over the tool body 17. Then the tool body 17 of the forming tool 15 is bent about the bending moment centre Mc of the tool body 17 in an adequate manner, while increasing the temperature such that slipping between essentially all layers 9',9",9''",9"'" of the composite material occurs. The blank 1 is fixed onto the forming surfaces 31, 33, 59 (in case of production of a curved C-beam) of the tool body 17 during the bending action.

FIGS. 7a and 7b illustrate a tool body 17 comprising an insert 37 displacing the bending moment centre Mc near the inner flange 23 of a curved C-beam 20 of composite material. The tool body 17 is provided for application of a blank 1 for manufacturing of a C-beam 20 having the inner 23 and an outer flange 23' and a web 25. A third portion forming surface 59 of the flexible tool body 17 is arranged opposite the first portion forming surface 31. The third portion forming surface 59 forms the outer flange 23' and the first portion forming surface 31 forms the inner flange 23. The first elongated portion 23 (i.e. the flange) has a curvature which curves along a plane being parallel with the plane of the second portion (i.e. the web).

In FIGS. 9a-9b are illustrated cross-sections of different curved elongated structural elements 20 having two flanges. The FIG. 9a illustrates a C-beam's cross section A-A of FIG. 7b wherein the inner flange portion 23 has been formed with only a bending action and the web 25 has been formed with both a bending and a stretching action. In FIG. 9b is shown a C-beam being produced by only bending performance of the web, wherein the flanges being influenced by both drawing forces and a bending action. The FIG. 9c illustrates a cross section of a L-beam shown in FIG. 2c. In FIG. 8a is illustrated the web portion 25 from the side before being bent. Short broken lines 60', 60", 60"' illustrates the blank's 1 composite material property regarding its extension length. In FIG. 8b is illustrated the web portion 25 when the bending of the tool body 17 is fulfilled. In illustration of the extension of the composite material due to the bending moment centre Mc of the tool body 17 being displaced towards the inner curvature of the tool body 17, the broken lines 60', 60" are longer than the broken lines 60''', symbolizing the stretching of the blank's composite material during manufacturing.

The method for manufacturing of the curved elongated structural element 20 of composite material comprises the steps of providing the substantially flat blank 1 of composite material. The blank 1 comprises a first 19' and second 19" elongated edge. The blank 1 is folded over a first portion forming surface 31 and a second portion forming surface 33 of an elongated forming tool 15 (the tool body 17) for forming the first elongated portion 23 (the flange) and the elongated second portion 25. The bending of the forming tool's tool body 17 is made such that its bending moment centre Mc prevails essentially adjacent the first portion forming surface 31. In the case of manufacturing of a structural element 20 comprising two flanges 23, 23' and the web 25, the method comprises the step of folding the blank also over the third portion forming surface 59 of the tool body 17 for forming the element's 20 third elongated portion 23' opposite the first portion 23.

The word folding in the present application can be replaced by the words bending, curving etc. Bent portions of the curved elongated structural element or radii are understood to be provided essentially rounded, also where the figures show sharp curves or sharp bends. The wording radius of curvature shall be interpreted as a curvature with one radius or a curvature with several different radii.

The present invention is of course not in any way restricted to the preferred embodiments described above, but many possibilities to modifications or combinations of the described embodiments thereof should be apparent to a person with ordinary skill in the art without departing from the basic idea of the invention as defined in the appended claims. The composite plastic can be thermo setting plastic, epoxi resins, thermoplastics, polyester resins, fibreglass reinforced plastics etc.

## Claims

1. A method for manufacturing of a curved elongated structural element (20) of composite material, the curved elongated structural element (20) comprises a first elongated portion (23) and a second elongated portion (25) in an angled relation, the method comprises the steps of:
- providing a substantially flat blank (1) of composite material comprising a first (19') and second elongated edge (19");
- folding the blank (1) over a first portion forming surface (31) and a second portion forming surface (33) of a forming tool's (15) flexible tool body (17) for forming the first elongated portion (23) and the second elongated portion (25); and
- bending the forming tool's (15) tool body (17) such that its bending moment centre (Mc) prevails essentially adjacent the first portion forming surface (31).

2. The method according to claim 1, **wherein** the method comprises the further steps of:
- folding the blank (1) over a third portion forming surface (59) of the forming tool (15) for forming a third elongated portion (23') opposite the first portion (23).

3. The method according to claim 1 or 2, **wherein** the first and second elongated edges (19', 19") are essentially parallel with each other.

4. The method according to any of claim 1 to 3, **wherein** the step of bending the forming tool's (15) tool body (17) is subsequent a step of clamping the blank's both short ends (55) in a fix position relative the forming surfaces (31, 33, 59) of the tool body (17).

5. The method according to any of the preceding claims, wherein the step of bending the tool body (17) is performed such that the bending moment centre (Mc) prevails absolutely adjacent the first portion forming surface (31).

6. The method according to any of the preceding claims, wherein the step of providing the blank (1) is performed by an automatic tape laying (ATL-) apparatus (3) adding layers of fibre-reinforced tape (5) onto each other.

7. The method according to any of the preceding claims, **wherein** the method further comprises the step of:
- curing the folded blank (1), and
- removing the curved elongated structural element (20) from the forming tool(15).

8. The method according to claim 7, wherein the step of curing the blank (1) is performed by:
- sealing the blank (1) in a vacuum bag (35) before the folding step;
- evacuating air from the vacuum bag (35);
- heating the blank (1) by means of a heating means (43);
- folding the blank (1); and
- bending the tool body (17) in an adequate manner while increasing the temperature such that slipping between essentially all layers (9', 9", 9"', 9"") of the composite material occurs.

9. The method according to any of the preceding claims, wherein the first elongated portion (23) is a flange and the second elongated portion (25) is a web.

10. An apparatus for manufacturing of a curved elongated element (20) comprising a first elongated portion (23) and a second elongated portion (25), the apparatus (29) comprises a forming tool (15) comprising a first portion forming surface (31) and a second portion forming surface (33) of a flexible tool body (17), a folding means (21) for folding a blank (1) of composite material over the first and second portion forming surface (31, 33), and a tool bending means (27) connected to the flexible tool body (17) for forming the curved elongated element (1), **characterised in that** the tool bending means (27) is arranged such that during bending of the flexible tool body (17), the bending moment centre (Mc) prevails essentially adjacent the first portion forming surface (31).

11. The apparatus according to any of the preceding claims, **wherein** the folding means (21) comprises a vacuum bag (35) being arranged for evacuation of air such that during said evacuation of air, the blank (1) disposed therein will fold over the over the first (31) and second portion forming surface (33) of the tool body (17) for providing an angle between the first elongated portion (23) and the second elongated portion (25).

12. The apparatus according to claim 10 or 11, **wherein** the tool bending means (27) is arranged such that during bending of the flexible tool body (17), the bending moment centre (Mc) of the tool body (17) prevails absolutely adjacent the first portion forming surface (31).

13. The apparatus according to any of claim 10 to 12, **wherein** the tool bending means (27) comprises an insert (37) of rigid material being disposed adjacent the first portion forming surface (31) of the flexible tool body (17) and a stretchable strain member (39) being disposed along the flexible tool body (17) opposite the first portion forming surface (13) of the flexible tool body (17).

14. The apparatus according to any of claim 13, **wherein** the insert (37) coincides with the bending moment centre (Mc) of the tool body during bending.

15. The apparatus according to any of the preceding claims, **wherein** the forming tool (15) comprises a clamping device (53) for clamping the blank's (1) both short ends (55) in a fix position relative the tool body (17).

16. The apparatus according to any of the preceding claims, **wherein** a third portion forming surface (59) of the flexible tool body (17) is arranged opposite the first portion forming surface (31).
